Europäisches Patentamt

European Patent Office

Office européen des brevets

(11) Numéro de publication : **0 429 334 B1**

# FASCICULE DE BREVET EUROPEEN

(45) Date de publication du fascicule du brevet :
**04.11.92 Bulletin 92/45**

(51) Int. Cl.$^5$ : **B60S 1/32**

(21) Numéro de dépôt : **90403187.9**

(22) Date de dépôt : **09.11.90**

(54) **Essuie-glace à déflecteur d'air notamment de véhicule automobile.**

(30) Priorité : **17.11.89 FR 8915132**

(43) Date de publication de la demande :
**29.05.91 Bulletin 91/22**

(45) Mention de la délivrance du brevet :
**04.11.92 Bulletin 92/45**

(84) Etats contractants désignés :
**DE ES GB IT**

(56) Documents cités :
**DE-U- 8 518 515**
**FR-A- 1 296 311**
**FR-A- 2 505 754**
**FR-A- 2 594 083**

(56) Documents cités :
**GB-A- 2 145 928**
**PATENT ABSTRACTS OF JAPAN vol. 12, no.**
**52 (M-668)(2899) 17 février 88, & JP-**
**A-62199558 (NIPPON DENSO) 03 septembre**
**1987**

(73) Titulaire : **VALEO SYSTEMES D'ESSUYAGE**
**11, rue Faraday**
**F-78180 Montigny-Le-Bretonneux (FR)**

(72) Inventeur : **Maubray, Daniel**
**16, Boulevard Rodin**
**F-92130 Issy-Les-Moulineaux (FR)**

(74) Mandataire : **Gamonal, Didier**
**Société VALEO Service Propriété Industrielle**
**30, rue Blanqui**
**F-93406 Saint-Ouen Cédex (FR)**

EP 0 429 334 B1

## Description

La présente invention se rapporte à un essuie-glace muni d'un déflecteur d'air, notamment de véhicule automobile.

Un déflecteur d'air est habituellement utilisé en liaison avec un essuie-glace, constitué généralement d'un bras d'essuie-glace portant à articulation un balai d'essuie-glace comportant une monture porteuse d'une lame d'essuie-glace apte à venir balayer une surface vitrée, telle qu'un pare-brise de véhicule automobile.

Le déflecteur d'air a pour but généralement de dévier les flux d'air frappant ledit balai lorsque le véhicule est en mouvement à grande vitesse et cela pour éviter le décollement dudit balai, et plus particulièrement de la lame d'essuie-glace, sous l'effet des forces aérodynamiques créées par les flux d'air, soulèvement laissant intact une pellicule d'eau sur la surface à essuyer et gênant à terme la visibilité du conducteur.

Un déflecteur, notamment celui décrit dans le document FR-A-2 621 288, présente une partie profilée comportant une première zone sensiblement plane s'étendant depuis un bord avant vers l'arrière, ladite première zone étant faiblement inclinée par rapport au plan moyen de la surface à essuyer, et une seconde zone faisant suite à la première, d'inclinaison supérieure à l'inclinaison de la première zone, ladite partie profilée se trouvant à une distance de la surface à essuyer suffisamment réduite pour créer un effet de sol produisant une dépression relativement importante au dessous du déflecteur, c'est-à-dire dans la zone comprise entre la surface à essuyer et la partie profilée, ce qui permet d'appliquer correctement la lame d'essuie-glace que porte le balai contre la surface à essuyer.

Ce type de déflecteur est monté en avant du balai d'essuie-glace, en considérant le sens de l'écoulement des flux d'air venant le parcourir.

Il a été constaté que les flux d'air, après écoulement le long de la partie profilée, viennent heurter un obstacle constitué pour partie par la lame d'essuie-glace du balai d'essuie-glace.

Cet obstacle a pour inconvénient majeur de créer des perturbations de la circulation des flux d'air pouvant modifier la dépression souhaitée en dessous de la partie profilée du déflecteur et par conséquent nuit à l'effet de sol souhaité.

La présente invention se propose de remédier à cet inconvénient en proposant un essuie-glace muni d'un déflecteur de conception très simple permettant d'obtenir, grâce au déflecteur, un effet de sol souhaité quelle que soit la circulation du flux d'air venant le parcourir.

Selon l'invention, un essuie-glace à déflecteur d'air pour essuyer une surface vitrée, telle qu'un pare-brise de véhicule automobile, se composant de deux éléments principaux, l'un des éléments étant un bras d'essuie-glace portant à articulation l'autre des éléments formés par un balai d'essuie-glace, l'un au moins des deux éléments portant le déflecteur d'air comportant une partie profilée créant une dépression entre la surface à essuyer et ladite partie profilée, est caractérisé en ce qu'un déflecteur auxiliaire est prévu entre le déflecteur d'air et la surface à essuyer pour dévier les flux d'air hors du champ d'action de la lame d'essuie-glace, de manière à ce que ces flux d'air ne perturbent en aucune manière la dépression procurée par le déflecteur d'air.

Grâce à cette disposition les flux d'air pouvant heurter la lame d'essuie-glace sont déviés par le déflecteur auxiliaire hors du champ d'action de la lame d'essuie-glace et ne perturbent en aucune manière la dépression procurée par le déflecteur d'air.

Selon un mode de réalisation de l'invention, le déflecteur auxiliaire présente un profil, en section, allant en diminuant à partir de son bord extrême avant vers son bord extrême arrière.

Selon un autre mode de réalisation de l'invention le déflecteur auxiliaire présente une direction générale inclinée par rapport à la surface à essuyer.

De par la configuration de ce déflecteur auxiliaire une dépression est créée en avant de la lame d'essuie-glace portée par le balai et améliore la qualité de l'essuyage.

Les autres caractéristiques et avantages de la description ressortiront de la description qui va suivre en se référant aux dessins annexés, donnée à titre d'exemple, sur lesquels :

- la figure 1 est une vue frontale d'un essuie-glace à déflecteur d'air selon l'invention ;
- la figure 2 est une vue en coupe partielle selon la ligne AA de la figure 1 ;
- la figure 3 est une vue en coupe partielle selon la ligne BB de la figure 1 ;
- la figure 4 est une vue, en coupe partielle, montrant une variante de réalisation de la figure 3 ;
- la figure 5 est une vue frontale d'un essuie-glace à déflecteur d'air suivant une autre variante de réalisation de l'invention ;
- la figure 6 est une vue en coupe partielle selon la ligne CC de la figure 5 ;
- la figure 7 est une vue en coupe partielle selon la ligne DD de la figure 5.
- la figure 8 est une vue frontale d'un essuie-glace à déflecteur d'air suivant une autre variante de réalisation de l'invention.
- la figure 9 est une vue en coupe partielle selon la ligne EE de la figure 8.
- la figure 10 est une vue en coupe partielle selon ligne FF de la figure 8.
- la figure 11 est une vue selon la flèche G de la figure 8.

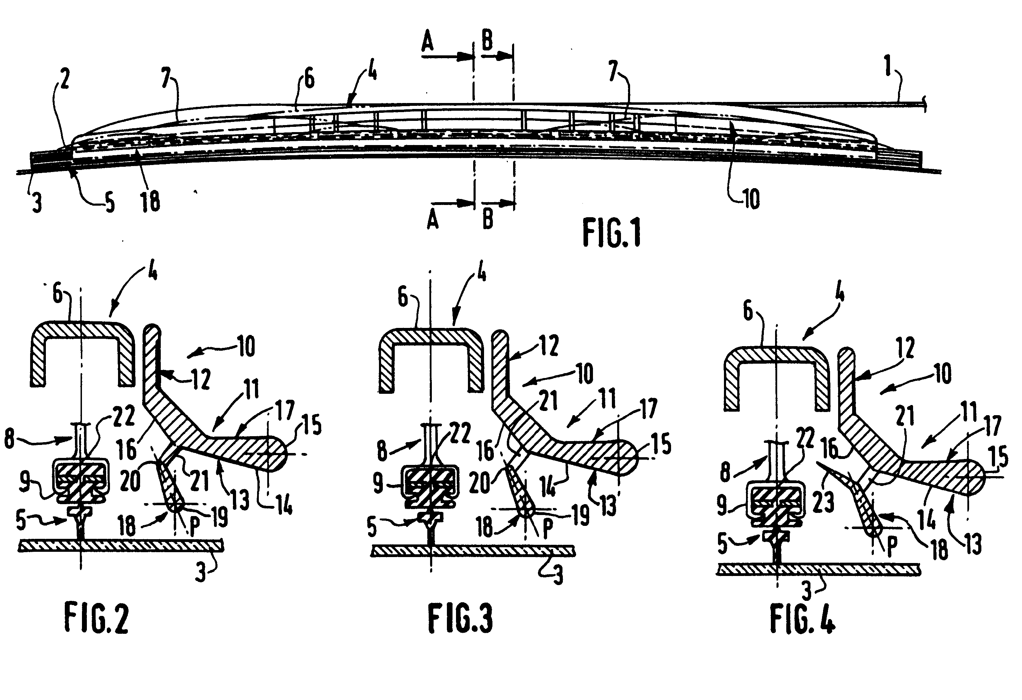

On se réfère maintenant aux figures 1 à 3 sur lesquelles il est montré un essuie-glace à déflecteur d'air.

Un essuie-glace est généralement constitué de deux éléments principaux, l'un des éléments étant un bras d'essuie-glace 1 portant à articulation un balai d'essuie-glace 2 apte à essuyer une surface vitrée 3, telle qu'un pare-brise de véhicule automobile.

Le balai d'essuie-glace 2 comprend, d'une manière connue en soi, une monture porteuse 4 d'une lame d'essuie-glace 5.

Cette monture porteuse est constituée d'un étrier principal 6 de forme générale cintrée et présentant en section un profil en forme de U inversé (figure 2) aux extrémités duquel est porté à articulation au moins un système de palonnier (figure 1).

Dans l'exemple décrit, il est prévu que le système à palonnier soit constitué d'un palonnier intermédiaire 7 articulé à chaque extrémité de l'étrier principal 6 et portant à chacune de ses extrémités libres un palonnier secondaire 8, visible en partie sur les figures 2, 3, lesdits palonniers secondaires 8 présentant à chacune de leurs extrémités de griffes de pincement 9 pour le maintien de la lame d'essuie-glace 5 sur la monture porteuse 4.

Egalement de manière connue en soi, le balai d'essuie-glace 2 est apte à être porté à articulation par le bras d'essuie-glace 1 munie d'une partie femelle d'articulation apte à coopérer avec une partie mâle d'articulation prévue dans une ouverture portée par la monture 4.

Un déflecteur d'air 10 est porté par l'un des éléments décrits précédemment, qui, dans l'exemple représenté, est le balai 2 mais il peut être envisagé que ce déflecteur soit porté par le bras d'essuie-glace 1, ce bras d'essuie-glace constituant l'autre élément du dispositif d'essuie-glace.

Dans la suite de la description il est fait référence à un type particulier de déflecteur d'air, mais l'invention peut s'appliquer à tout autre type de déflecteur.

Le type de déflecteur servant de base à la description de l'invention est décrit plus en détail dans le document FR-A-2 621 288 et ne sera décrit que dans ses grandes lignes.

Le déflecteur 10 présente une partie profilée 11 et un moyen de liaison 12, s'étendant en direction de la surface à essuyer 3, ledit moyen de liaison 12 servant à relier la partie profilée 11, ici au balai 2, de manière à ce que ladite partie profilée soit portée par le balai.

Avantageusement, la partie profilée et les moyens de liaison, lesdits moyens consistant en pratique en un voile, s'étendent sensiblement tout au long de la direction longitudinale du balai et sont élaborés à partir d'une matière plastique rigide.

La partie profilée 11 présente une forme sensiblement convexe tournée vers la surface à essuyer 3, et comporte, sur sa surface interne 13, une première zone 14 sensiblement plane inclinée d'un certain angle par rapport à la surface 3 et en s'étendant depuis un bord avant 15 vers l'arrière, c'est-à-dire vers le balai 2, ledit bord avant 15 ayant une forme arrondie sensiblement semi-cylindrique.

Une seconde zone 16 fait suite à la première zone 14 en ayant un angle, par rapport à la surface à essuyer 3, plus grand que l'angle de la première zone de telle sorte que le profil de la surface interne de la partie profilée 11 soit celui d'un dièdre convexe tourné vers la surface à essuyer 3.

La surface externe 17 de la partie profilée 11 a une forme de dièdre concave, l'épaisseur de ladite partie profilée diminuant progressivement du bord avant 15 vers le balai 2.

Comme il est mieux visible sur les figures 2 et 3 un déflecteur auxiliaire 18 est prévu entre la surface à essuyer 3 et le déflecteur 10, le déflecteur auxiliaire se trouvant à distance sensiblement égale de la surface 3 et du déflecteur d'air 10 en s'étendant sensiblement sur la même étendue longitudinale que le déflecteur d'air 10.

Ce déflecteur auxiliaire présente, en section, un profil aérodynamique, tel qu'un profil allant en diminuant à partir d'un bord extrême avant 19 situé sensiblement en vis-à-vis et à distance de la surface à essuyer 3, jusqu'à un bord extrême arrière 20 situé en vis-à-vis du balai 2. La distance entre le bord extrême avant 19 et la surface à essuyer 3 est plus petite que celle considérée entre le bord 15 du déflecteur d'air 10 et de la surface 3, lesdits bords extrêmes ayant de préférence chacun une forme arrondie sensiblement semi-cylindrique.

Le déflecteur auxiliaire 18 forme un angle avec la surface à essuyer 3 plus grand que celui de la zone 16 précédemment définie.

Cet angle est à considérer entre un plan P passant par l'âme centrale du déflecteur auxiliaire et la direction générale de la surface à essuyer 3.

Le déflecteur auxilaire 18 est porté par la surface interne 13 de la partie profilée 11 du déflecteur d'air 10 et à distance de ladite surface grâce à des pattes 21 issues, dans l'exemple des figures 2 et 3, de l'intersection des zones 14 et 16 et venant rejoindre le bord extrême arrière 20 dudit déflecteur auxiliaire, ces pattes étant sensiblement orthogonales au plan P définissant la direction générale du déflecteur auxiliaire 10.

En se référant à la figure 1, il est prévu une multiplicité de pattes, ici onze pattes régulièrement réparties le long de la direction longitudinale du déflecteur 10.

En pratique, il est prévu que la déflecteur d'air 10, le déflecteur auxiliaire 18 et les pattes 21 soient formés d'un ensemble monobloc, obtenu par exemple par moulage d'une matière plastique de constitution suffisamment rigide pour former un ensemble monobloc.

Ainsi, ce déflecteur auxiliaire 18 s'étend dans une direction longitudinale correspondant à la direction longitudinale du déflecteur 10 et est relié à celui-ci par une multiplicité de pattes en permettant, d'une part, aux flux d'air d'être déviés par ledit déflecteur auxiliaire au-delà du dos 22 de la lame d'essuie-glace 5 et, d'autre part, d'améliorer la qualité de l'effet de sol procurée par la partie profilée 11.

En se référant à la figure 4, le déflecteur auxiliaire 18 se prolonge à partir de son bord extrême arrière 20 par un becquet 23 en direction du balai 2 et dont le profil, en section, va en diminuant à partir dudit bord extrême arrière vers le balai 2 en présentant sensiblement une forme de triangle dont la pointe se trouve à distance dudit balai.

Comme mieux visible sur la figure 4, ce becquet a une direction inclinée par rapport à la surface à essuyer 3 plus petite que celle de la direction du déflecteur auxiliaire 18.

Grâce à cette disposition, le volume délimité par la surface interne 13 du déflecteur d'air 10 et le déflecteur auxiliaire 18 associé au becquet 23 est un premier volume, en section, de forme conique délimité par la première zone 14 et le déflecteur auxiliaire 18 se poursuivant à partir du bord extrême arrière 20 dudit déflecteur auxiliaire par un second volume délimité par la seconde zone 16 du déflecteur 10 et le becquet 23.

Cette configuration procure un effet d'aspiration des flux d'air grâce au premier volume, ce qui permet d'améliorer la dépression donc l'effet de sol du déflecteur 10, et un effet d'éjection desdits flux d'air hors de l'obstacle formé par la lame d'essuie-glace 5.

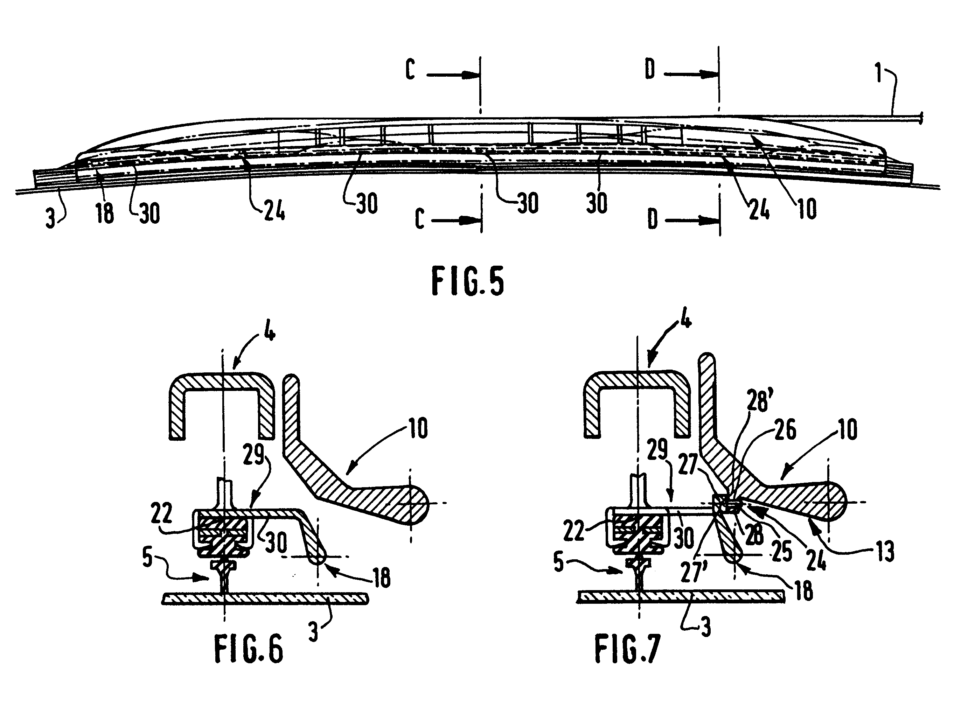

On se réfère maintenant aux figures 5 à 7 sur lesquelles le déflecteur auxiliaire 18, tel que précédemment défini, est porté en au moins deux articulations 24 par le déflecteur 10.

Comme mieux visible sur la figure 7 les articulations 24 sont constituées d'articulations à rotation.

Ces articulations à rotation 24 sont constituées par coopération d'un axe 25 avec une ouverture 26.

Dans l'exemple décrit, l'axe d'articulation 25 est porté par une protubérance 27 issue du bord extrême arrière 20 du déflecteur auxiliaire 18, ladite protubérance étant sensiblement orthogonale à la surface à essuyer et ledit axe étant perpendiculaire à ladite protubérance et l'ouverture 26 est portée par une saillie 28 issue de la surface interne 13 de la partie profilée 11 en étant orthogonale à la surface à essuyer, la protubérance 27 et la saillie 28 présentant chacune une surface 27' et 28' en vis-à-vis l'une de l'autre et apte à glisser l'une sur l'autre lors du mouvement de rotation du déflecteur auxiliaire 18 et après montage dudit déflecteur auxiliaire sur le déflecteur d'air 10.

En se référant en plus à la figure 6, le déflecteur auxiliaire 18 présente également des moyens de commande en déplacement 29 autour des articulations 24.

Ces moyens de commande en déplacement consistent en au moins un doigt rigide 30 issu du bord extrême arrière 20 du déflecteur auxiliaire 18 et viennent prendre appui sur la lame d'essuie-glace 4.

En pratique, ces doigts sont orthogonaux à la direction générale de la lame d'essuie-glace 5 et prennent appui sur la face de la lame d'essuie-glace opposée à celle en contact avec la surface à essuyer 3, c'est-à-dire sur le dos 22.

En se référant à la figure 5, il peut être constaté qu'il est prévu cinq doigts rigides de commande 30 régulièrement répartis le long de la direction longitudinale du déflecteur auxiliaire 18.

Le fonctionnement du déflecteur auxiliaire 18 est explicité à partir de la figure 5, figure montrant l'ensemble balai-déflecteur en appui sur une surface à essuyer 3.

Dans le cas où la surface 3 est une surface à grande courbure, la lame d'essuie-glace va épouser cette courbure en ayant une forme incurvée dans laquelle la zone située dans le milieu de la longeur de la lame va se rapprocher de l'étrier principal 6, alors que les extrémités de ladite lame vont s'éloigner dudit étrier principal.

Pendant ce mouvement, la lame d'essuie-glace 5 agit, ici par son dos 22, sur les doigts de commande 30 que porte le déflecteur auxiliaire 18.

Ces doigts vont entraîner le déflecteur auxiliaire en un déplacement tel que le bord extrême arrière 20 dudit déflecteur va s'allonger alors que son bord extrême avant 20 va se contracter en donnant une configuration courbe du déflecteur par déplacement de son corps dans le plan P et par rotation partielle autour des articulations 24.

Ceci est rendu possible par le fait que les doigts 30 sont distincts de la lame 5 et que lesdits doigts peuvent glisser de manière sensiblement horizontale sur le dos de ladite lame.

Cette action sur les doigts 30 de la part de la lame 5 va procurer une courbure du déflecteur 18 qui a, en final, la même courbure que ladite lame.

Ceci est réalisé par rotation des axes 25 portés par les protubérances 27 liées audit déflecteur auxiliaire dans les ouvertures 26 que portent les saillies 28 du déflecteur d'air 10.

Dans ce cas, il est prévu que le déflecteur auxiliaire soit en matière plastique souple pour pourvoir se déformer.

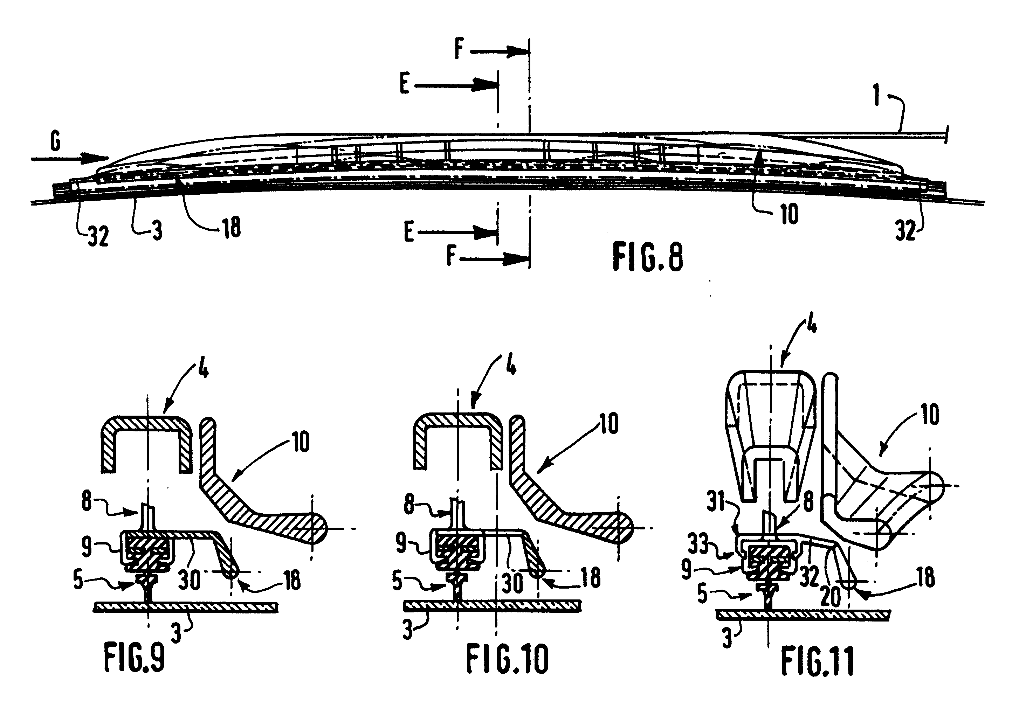

Dans la variante de réalisation de l'invention montrée aux figures 8 à 11, le déflecteur auxiliaire 18 est porté au niveau de ses extrémités longitudinales en au moins deux points 31 par l'un des éléments constitutifs du balai d'essuie-glace 2, ici à titre d'exemple le palonnier secondaire 8 du balai 2.

Comme mieux visible sur la figure 11, le bord arrière 20 du déflecteur auxiliaire 18 se prolonge à chaque endroit en vis-à-vis des griffes 9 extrêmes longitudinales de chaque palonnier 8 par deux pattes rigides 32 portant à leurs extrémités des griffes d'accrochage 33 venant enserrer les griffes 9 du palonnier secondaire 8.

Ainsi, le déflecteur auxiliaire 18 est fixé à chacune de ses extrémités longitudinales sur le balai d'essuie-glace 2, et tout déplacement en rotation du palonnier secondaire 8 portant la lame d'essuie-glace 5 se répercute par un déplacement des points 31 liant le déflecteur auxiliaire audit balai.

Comme précédemment décrit, et comme visible sur les figures 9 et 10, le déflecteur auxiliaire 18 est également pourvu de doigts de commande 30 s'appuyant sur le dos 22 de la lame 5.

Le fonctionnement du déflecteur auxiliaire 18 est sensiblement identique à celui mentionné ci-dessus à part le fait que la liaison au niveau des points 31 est une liaison fixe et que la déformation élastique du déflecteur auxiliaire se fait entre les deux points 31 grâce aux doigts de commande 30.

La présent invention n'est pas limitée aux exemples de réalisation décrit précédemment mais englobe toute variante.

Notamment, les doigts de commande 30 peuvent être liés à la lame d'essuie-glace 5 d'une manière telle que le déplacement dans les deux sens verticaux de ladite lame puisse se répercuter sur le déflecteur auxiliaire 18.

## Revendications

1) Essuie-glace à déflecteur d'air (10) pour essuyer une surface vitrée (3), telle qu'un pare-brise de véhicule automobile, se composant de deux éléments principaux, l'un des éléments étant un bras d'essuie-glace (1) portant à articulation l'autre des éléments formés par un balai d'essuie-glace (2), l'un au moins des deux éléments portant un déflecteur (10) comportant une partie profilée (11) créant une dépression entre la surface à essuyer (3) et ladite partie profilée, caractérisé en ce qu'un déflecteur auxiliaire (18) est prévu entre le déflecteur d'air (10) et la surface à essuyer (3) pour dévier les flux d'air hors du champ d'action de la lame d'essuie-glace, de manière à ce que ces flux d'air ne perturbent en aucune manière la dépression procurée par le déflecteur d'air.

2) Essuie-glace à déflecteur d'air selon la revendication 1, caractérisé en ce que le déflecteur auxiliaire (18) présente un profil, en section, allant en diminuant à partir de son bord extrême avant (19) vers son bord extrême arrière (20).

3) Essuie-glace à déflecteur d'air selon la revendication 1 ou 2, caractérisé en ce que le déflecteur auxiliaire (18) présente une direction générale (P) inclinée par rapport à la surface à essuyer (3).

4) Essuie-glace à déflecteur d'air selon l'une des revendications 1 à 3, caractérisé en ce que le déflecteur auxiliaire (18) se prolonge à partir de son bord extrême arrière (20) par un becquet (23).

5) Essuie-glace à déflecteur d'air selon la revendication 4, caractérisé en ce que le becquet (23) a une direction générale inclinée par rapport à la surface à essuyer (3) plus petite que celle du déflecteur auxiliaire (18).

6) Essuie-glace à déflecteur d'air selon l'une des revendications précédentes, caractérisé en ce que le déflecteur auxiliaire (18) est porté par le déflecteur d'air (10).

7) Essuie-glace à déflecteur d'air selon la revendication 6, caractérisé en ce que le déflecteur auxiliaire (18) est relié au déflecteur d'air (10) de manière monobloc et à distance dudit déflecteur.

8) Essuie-glace à déflecteur d'air selon la revendication 6, caractérisé en ce que le déflecteur auxiliaire (18) est relié au déflecteur (10) par au moins deux pattes de liaison (21).

9) Essuie-glace à déflecteur d'air selon l'une des revendications 1 à 6, caractérisé en ce que le déflecteur auxiliaire (18) est porté en au moins deux articulations (24) par le déflecteur d'air (10).

10) Essuie-glace à déflecteur d'air selon la revendication 9, caractérisé en ce que les articulations (24) sont des articulations à rotation.

11) Essuie-glace à déflecteur d'air selon la revendication 10, caractérisé en ce que les articulations (24) sont constituées par un axe (25) porté par le déflecteur auxiliaire (18) ou le déflecteur d'air (10) coopérant avec une ouverture (26) portée par le déflecteur d'air (10) ou le déflecteur auxiliaire (18).

12) Essuie-glace à déflecteur d'air selon l'une des revendications 1 à 5, caractérisé en ce que le déflecteur auxiliaire (18) est porté en au moins deux points (31) par au moins un élément constitutif (8) de la monture (4) du balai (2).

13) Essuie-glace à déflecteur d'air selon la revendication 12, caractérisé en ce que le déflecteur auxiliaire (18) est porté par des griffes (9) que présente un palonnier (8) de la monture (4).

14) Essuie-glace à déflecteur d'air selon la revendication 13, caractérisé en ce que la déflecteur auxiliaire (18) présente des griffes d'accrochage (33) sur les griffes (9) du palonnier (8).

15) Essuie-glace à déflecteur d'air selon l'une des revendications 9 à 14, caractérisé en ce que le déflecteur auxiliaire (18) comporte des moyens de commande en déplacement (29).

16) Essuie-glace à déflecteur d'air selon la revendication 15, caractérisé en ce que les moyens de commande en déplacement (29) consistent en au moins un doigt rigide de commande (30) issu du déflecteur auxiliaire (18) et actionnés par la lame d'essuie-glace (5) du balai d'essuie-glace (2).

## Patentansprüche

1) Scheibenwischer mit Luftdeflektor (10) für die Reinigung einer Scheibenfläche (3) wie z.B. einer Kraftfahrzeug-Windschutzscheibe, bestehend aus zwei Hauptelementen, wobei es sich bei dem einen der Elemente um einen Scheibenwischerarm (1) handelt, welcher gelenkig das andere Element, bestehend aus einem Scheibenwischerblatt (2), trägt, während wenigstens eines der beiden Elemente einen Deflektor (10) mit einem Profilteil (11) trägt, welches einen Unterdruck zwischen der zu reinigenden Fläche (3) und dem genannten Profilteil erzeugt, **dadurch gekennzeichnet**, daß ein Hilfsdeflektor (18) zwischen dem Luftdeflektor (10) und der zu reinigenden Fläche (3) vorgesehen ist, um den Luftstrom aus dem Wirkungsbereich des Wischblatts abzulenken, so daß diese Luftströme den durch den Luftdeflektor erzeugten Unterdruck in keiner Weise stören.

2) Scheibenwischer mit Luftdeflektor nach Anspruch 1, **dadurch gekennzeichnet,** daß der Hilfsdeflektor (18) im querschnitt ein Profil aufweist, welches sich von der vorderen Außenkante (19) zur hinteren Außenkante (20) hin verjüngt.

3) Scheibenwischer mit Luftdeflektor nach Anspruch 1 oder 2, **dadurch gekennzeichnet**, daß der Hilfsdeflektor (18) eine allgemeine Richtung (P) aufweist, die im Verhältnis zur zu reinigenden Fläche (3) geneigt ist.

4) Scheibenwischer mit Luftdeflektor nach einem der Ansprüche 1 bis 3, **dadurch gekennzeichnet**, daß der Hilfsdeflektor (18) sich, ausgehend von der hinteren Außenkante (20), in einem Schnabel (23) fortsetzt.

5) Scheibenwischer mit Luftdeflektor nach Anspruch 4, **dadurch gekennzeichnet,** daß der Schnabel (23) eine im Verhältnis zur zu reinigenden Fläche (3) geneigte allgemeine Richtung aufweist, die kleiner ist als diejenige des Hilfsdeflektors (18).

6) Scheibenwischer mit Luftdeflektor nach einem der vorherigen Ansprüche, **dadurch gekennzeichnet,** daß der Hilfsdeflektor (18) auf dem Luftdeflektor (10) aufliegt.

7) Scheibenwischer mit Luftdeflektor nach Anspruch 6, **dadurch gekennzeichnet,** daß der Hilfsdeflektor (18) mit dem Luftdeflektor (10) in einem Block und in einer Entfernung vom genannten Reflektor verbunden ist.

8) Scheibenwischer mit Luftdeflektor nach Anspruch 6, **dadurch gekennzeichnet,** daß der Hilfsdeflektor (18) mit dem Deflektor (10) über wenigstens zwei Verbindungsklammern (21) verbunden ist.

9) Scheibenwischer mit Luftdeflektor nach einem der Ansprüche 1 bis 6, **dadurch gekennzeichnet,** daß der Hilfsdeflektor (18) an wenigstens zwei Gelenken (24) auf dem Luftdeflektor (10) aufliegt.

10) Scheibenwischer mit Luftdeflektor nach Anspruch 9, **dadurch gekennzeichnet,** daß die Gelenke (24) Drehgelenke sind.

11) Scheibenwischer mit Luftdeflektor nach Anspruch 10, **dadurch gekennzeichnet,** daß die Gelenke (24) aus einer Achse (25) bestehen, die auf dem Hilfsdeflektor (18) aufliegt oder wobei der Hilfsdeflektor (10) mit einer Öffnung (26) am Luftdeflektor (10) oder Hilfsdeflektor (18) zusammenwirkt.

12) Scheibenwischer mit Luftdeflektor nach einem der Ansprüche 1 bis 5, **dadurch gekennzeichnet**, daß der Hilfsdeflektor (18) an wenigstens zwei Stellen (31) auf wenigstens ein Bestandteil (8) der Halterung (4) des Wischblatts (2) aufliegt.

13) Scheibenwischer mit Luftdeflektor nach Anspruch 12, **dadurch gekennzeichnet,** daß der Hilfsdeflektor (18) auf Klemmen (9) aufliegt, die an einer Traverse (8) der Halterung (4) vorgesehen sind.

14) Scheibenwischer mit Luftdeflektor nach Anspruch 13, **dadurch gekennzeichnet,** daß der Hilfsdeflektor (18) Einhakklemmen (33) an den Klemmen (9) der Traverse (8) aufweist.

15) Scheibenwischer mit Luftdeflektor nach einem der Ansprüche 9 bis 14, **dadurch gekennzeichnet**, daß der Hilfsdeflektor (18) Betätigungsmittel für die Verschiebung (29) aufweist.

16) Scheibenwischer mit Luftdeflektor nach Anspruch 15, **dadurch gekennzeichnet,** daß die Betätigungsmittel für die Verschiebung (29) aus wenigstens einem Betätigungsfinger (30) bestehen, der vom Hilfsdeflektor (18) ausgeht, und daß sie das Wischblatt (5) der Scheibenwischerleiste (2) betätigen.

## Claims

1. A windscreen wiper having an air deflector (10) for wiping a glass surface (3), such as a windscreen of a motor vehicle, comprising two main elements, one of the elements being a windscreen wiper arm (1) carrying by articulation thereto the other element, which comprises a windscreen wiper blade (2), at least one of the two elements carrying a deflector (10) comprising a profiled portion (11) creating a depression between the swept surface (3) and the said profiled portion, characterised in that an auxiliary deflector (18) is provided between the air deflector (10) and the swept surface (3) for the purpose of diverting airflows away from the working zone of the wiping strip of the windscreen wiper, in such a way that the said air streams do not in any way disturb the depression created by the air deflector.

2. A windscreen wiper having an air deflector according to Claim 1, characterised in that the auxiliary deflector (18) has a profile in cross section which extends in a reducing manner from its extreme front edge (19) to its extreme rear edge (20).

3. A windscreen wiper having an air deflector according to Claim 1 or Claim 2, characterised in that the auxiliary deflector (18) defines a general direction (P) which is inclined with respect to the swept surface (3).

4. A windscreen wiper having an air deflector according to one of Claims 1 to 3, characterised in that the auxiliary deflector (18) is extended beyond its extreme rear edge (20) by a fin (23).

5. A windscreen wiper having an air deflector according to Claim 4, characterised in that the fin (23) extends in a general direction at an inclination with respect to the swept surface (3) smaller than that of the auxiliary deflector (18).

6. A windscreen wiper having an air deflector according to one of the preceding Claims, characterised in that the auxiliary deflector (18) is carried by the air deflector (10).

7. A windscreen wiper having an air deflector according to Claim 6, characterised in that the auxiliary deflector (18) is joined to the air deflector (10) in a monobloc manner and is spaced away from the said deflector.

8. A windscreen wiper having an air deflector according to Claim 6, characterised in that the auxiliary deflector (18) is joined to the deflector (10) through at least two connecting lugs (21).

9. A windscreen wiper having an air deflector according to one of Claims 1 to 6, characterised in that the auxiliary deflector (18) is carried by the air deflector (10) through at least two articulations (24).

10. A windscreen wiper having an air deflector according to Claim 9, characterised in that the articulations (24) provide rotational articulation.

11. A windscreen wiper having an air deflector according to Claim 10, characterised in that the articulations (24) comprise a pivot pin (25) carried by the auxiliary deflector (18) or the air deflector (10) and cooperating with an aperture (26) carried by the air deflector (10) or the auxiliary deflector (18).

12. A windscreen wiper having an air deflector according to one of Claims 1 to 5, characterised in that the auxiliary deflector (18) is carried in at least two points (31) by at least one component element (8) of the support structure (4) of the blade (2).

13. A windscreen wiper having an air deflector according to Claim 12, characterised in that the auxiliary deflector (18) is carried by gripping elements (9) that form part of a yoke (8) of the support structure (4).

14. A windscreen wiper having an air deflector according to Claim 13, characterised in that the auxiliary deflector (18) has gripping elements (33) for attachment on to the gripping elements (9) of the yoke (8).

15. A windscreen wiper having an air deflector according to one of Claims 9 to 14, characterised in that the auxiliary deflector (18) includes displacement control means (29).

16. A windscreen wiper having an air deflector according to Claim 15, characterised in that the displacement control means (29) comprise at least one rigid control finger (30), projecting from the auxiliary deflector (18) and actuated by the wiping strip (5) of the windscreen wiper blade (2).

FIG.1

FIG.2

FIG.3

FIG.4

FIG.5

FIG.6

FIG.7

FIG.8

FIG.9

FIG.10

FIG.11